# NEUE EUROPÄISCHE PATENTSCHRIFT

(11) **EP 1 743 143 B2**
(45) Veröffentlichungstag und Bekanntmachung des Hinweises auf die Entscheidung über den Einspruch: **28.12.2011**
(45) Hinweis auf die Patenterteilung: 21.11.2007
(21) Anmeldenummer: 05737954.7
(22) Anmeldetag: 11.04.2005
(51) Int. Cl.: G01G 7/04

(54) **SCHMALES, SEITLICH ENG ANEINANDERREIHBARES WÄGESYSTEM**
NARROW WEIGHING SYSTEM CAPABLE OF BEING ARRANGED IN NARROWLY SPACED ROWS IN THE LATERAL DIRECTION
SYSTEME DE PESEE ETROIT, POUVANT ETRE ASSEMBLE DE FAÇON COMPACTE LATERALEMENT

(30) Priorität: 24.04.2004 DE 102004020144
(43) Veröffentlichungstag der Anmeldung: 17.01.2007
(73) Patentinhaber: SARTORIUS AG, 37075 Göttingen (DE); Kuhlmann, Otto, Göttingen (DE)
(72) Erfinder: KUHLMANN, Otto, Göttingen (DE); FLEICHER, Peter, Göttingen (DE)
(74) Vertreter: Schneider, Peter Christian
(86) Internationale Anmeldenummer: PCT/EP2005/003771
(87) Internationale Veröffentlichungsnummer: WO 2005/106404

(56) Entgegenhaltungen:
- EP-A- 0 291 258
- EP-A1- 1 195 588
- DE-A1- 2 853 073
- DE-A1- 10 015 311
- DE-A1- 10 242 118
- US-B1- 6 615 638

## Beschreibung

Die Erfindung bezieht sich auf eine Anordnung mehrerer seitlich nebeneinander angeordneter Wägesystem nach dem Prinzip der elektromagnetischen Kraftkompensation mit jeweils zwei Lenkern, die als Parallelführung einen Lastaufnehmer mit einem gehäusefesten Basisbereich verbinden, und mit mindestens einem Übersetzungshebel, der am Basisbereich gelagert ist und an dessen kurzem Hebelarm über ein Koppelelement die vom Lastaufnehmer übertragene Gewichtskraft angreift und an dessen langem Hebelarm ein Spule, die in den Luftspalt eines Permanentmagnetsystems hineinragt, befestigt ist, wobei das Permanentmagnetsystem breiter ist als der aus dem Basisbereich, den Lenkern, dem Lastaufnehmer und dem/den Übersetzungshebel (n) gebildete Systemkörper.

Wägesysteme dieser Art sind allgemein bekannt und beispielsweise in der DE 32 43 350 C2 beschrieben. Bei dem dort beschriebenen Wägesystem befindet sich der Übersetzungshebel, das Permanentmagnetsystem und die Spule im Bereich innerhalb der Parallelführung, also zwischen dem Basisbereich, dem Lastaufnehmer und den beiden Lenkern. Dieses System lässt sich zwar schmal bauen, dafür ist aber die Länge des Übersetzungshebels und der Raum für das Permanentmagnetsystem sehr eingeschränkt.

Ein entsprechendes System ist auch aus der EP 0 291 258 A2 bekannt, wobei dort auch der Aufbau aus zwei Teilbereichen, die über Abstandsstücke miteinander verbunden sind, beschrieben ist.

Um den Nachteil der beschränkten Länge des Übersetzungshebels zu vermeiden, ist es aus der DE 100 15 311 AI bekannt, den Übersetzungshebel auf einer Seite neben dem Basisbereich entlang zu führen und das Permanentmagnetsystem und die Spule außerhalb der Parallelführung anzuordnen. Dadurch ist zwar eine größere Länge des Übersetzungshebels möglich, die Breite des Wägesystems ist aber durch den seitlichen Übersetzungshebel deutlich größer.

Sollen nun mehrere schmale Wägesysteme eng in einer Reihe seitlich nebeneinander angeordnet werden, so ist der Raum für das Permanentmagnetsystem auch in der Breite sehr eingeschränkt. Sollen die Wägesysteme z.B. in einem seitlichen Abstand von 15 mm nebeneinander angeordnet sein, so darf das Permanentmagnetsystem höchstens eine Breite von 15 mm aufweisen, bei zylindrischen Permanentmagnetsystemen also einen Durchmesser von höchsten 15 mm. Dadurch ist die erzielbare Tragkraft solcher schmaler Wägesysteme sehr gering.

Aufgabe der Erfindung ist es daher, ein Wägesystem der eingangs genannten Art anzugeben, von dem mehrere in engem Abstand seitlich nebeneinander angeordnet werden können und bei dem die Größe des Permanentmagnetsystems weniger beschränkt ist und das deshalb für größere Höchstlast geeignet ist.

Erfindungsgemäß wird dies dadurch erreicht, dass die Wägesysteme jeweils einen Freiraum aufweisen, in den ein Permanentmagnetsystem eines benachbarten Wägesystems hineinragt bzw. in den die Permanentmagnetsysteme benachbarter Wägesysteme hineinragen und
dass der Freiraum und das Permanentmagnetsystem auf unterschiedlichen Seiten einer gemeinsamen horizontalen Mittelebene der Wägesysteme angeordnet sind und
dass jedes zweite Wägesystem um eine horizontale Längsachse gedreht eingebaut ist.

Dadurch kann das Permanentmagnetsystem praktisch doppelt so breit wie der Systemkörper gemacht werden. Das Permanentmagnetsystem kann entweder symmetrisch nach beiden Seiten überstehen und in beide benachbarte Wägesysteme hineinragen oder aber asymmetrisch angeordnet sein und an der einen Seite nicht überstehen und nur auf der anderen Seite in der vollen Breite in das benachbarte Wägesystem hineinragen. Dadurch entstehen in dieser zweiten Variante praktisch Wägesystempaare.

Gemäß einer weiteren vorteilhaften Ausbildung der Erfindung ist das Permanentmagnetsystem des Wägesystems nicht innerhalb der Parallelführung, sondern außerhalb auf der anderen Seite des Basisbereiches angeordnet. Dadurch lässt sich der Übersetzungshebel länger bauen und es kann ein größeres Übersetzungsverhältnis realisiert werden. Durch diese Maßnahme lässt sich die Höchstlast des Wägesystems weiter steigern. Die Durchführung des Übersetzungshebels durch den Basisbereich hindurch lässt sich vorteilhafterweise dadurch erreichen, dass der Basisbereich in zwei getrennte Teilbereiche unterteilt ist, dass der Übersetzungshebel zwischen diesen beiden Teilbereichen hindurchgeführt ist und dass die Basisbereiche zweier benachbarter Wägesysteme so miteinander verbunden sind, dass die beiden Teilbereiche des Basisbereiches des jeweils einen Wägesystems die beiden Teilbereiche des Basisbereiches des jeweils anderen Wägesystems in ihrer Lage zueinander fixieren. Sowohl für den Basisbereich als auch für den Übersetzungshebel kann dadurch die volle zur Verfügung stehende Breite genutzt werden und die Stabilität des Basisbereiches wird durch die Paarbildung erreicht.

Die Erfindung wird im Folgenden anhand der schematischen Figuren beschrieben. Dabei zeigt:
- Figur 1: eine Aufsicht auf mehrere nebeneinander angeordnete Wägesysteme,
- Figur 2: ein Wägesystem in Seitenansicht,
- Figur 3: das benachbarte Wägesystem in Seitenansicht,
- Figur 4: eine Variante zu Figur 1,
- Figur 5: eine zweite Variante eines Wägesystems in Seitenansicht,
- Figur 6: einen Schnitt längs der Linie VI - VI in Figur 5,
- Figur 7: eine dritte Variante eines Wägesystems in Seitenansicht,
- Figur 8: zwei benachbarte Wägesysteme in perspektivischer Ansicht als vierte Variante und
- Figur 9: die beiden Wägesysteme aus Figur 8 vor der Montage.

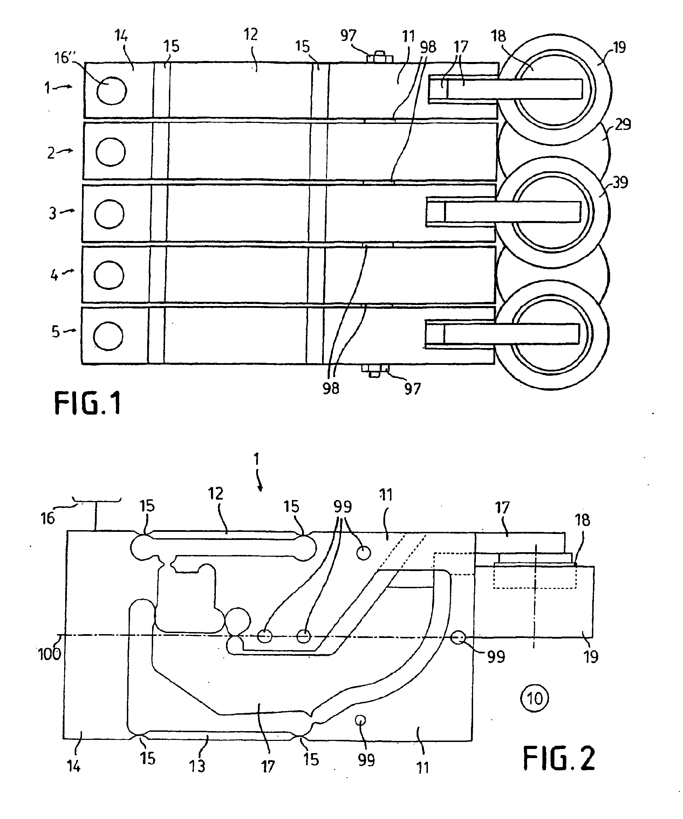

In Figur 1 sind in Aufsicht fünf nebeneinander angeordnete Wägesysteme 1...5 dargestellt. Das in Figur 1 oberste Wägesystem 1 ist in Figur 2 in Seitenansicht dargestellt. Dieses Wägesystem 1 besteht aus einem Basisbereich 11, zwei Lenkern 12 und 13 und einem Lastaufnehmer 14. Die beiden Lenker 12 und 13 mit den Gelenkstellen 15 bilden eine Parallelführung und verbinden den Lastaufnehmer 14 vertikal beweglich mit dem Basisbereich 11. Am Lastaufnehmer ist eine Waagschale 16 befestigt, die in Figur 2 nur ganz schematisch dargestellt ist und die in Figur 1 nur durch den Kreis 16" angedeutet ist. Weiter weist das Wägesystem einen Übersetzungshebel 17 auf, der am Basisbereich 11 drehbar gelagert ist. Am kürzeren Hebelarm des Übersetzungshebels greift die vom Lastaufnehmer übertragene Gewichtskraft an, am längeren Hebelarm ist die Spule 18 der elektromagnetischen Kraftkompensation befestigt. Die Spule ragt in den Luftspalt eines Permanentmagnetsystems 19 hinein. - Wägesysteme dieser Art sind allgemein bekannt und sind daher hier nur ganz kurz erläutert.

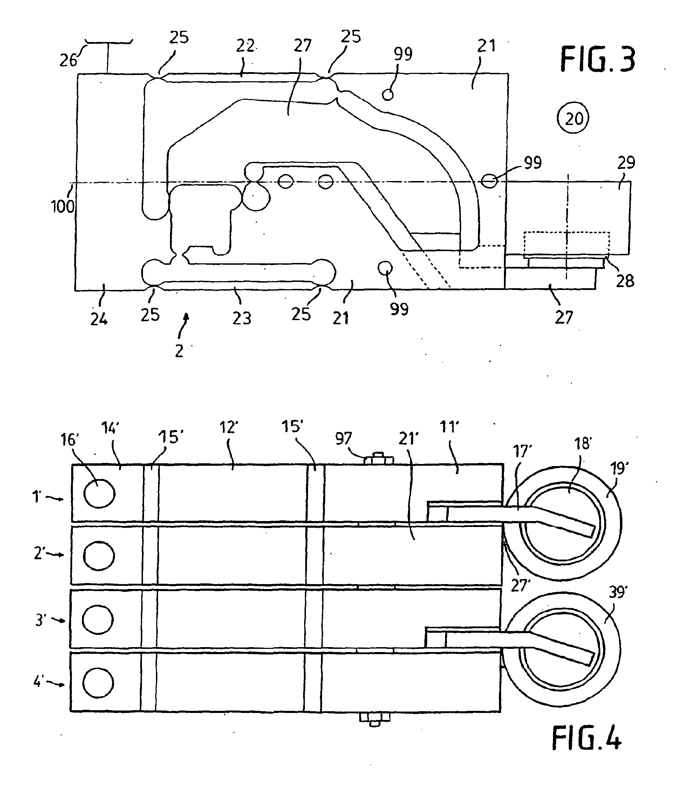

Beim erfindungsgemäßen Wägesystem ist nun der Durchmesser des Permanentmagnetsystems 19 etwa doppelt so groß wie die Breite des aus dem Basisbereich 11, den Lenkern 12 und 13 und dem Lastaufnehmer 14 gebildeten Systemkörpers. Weiter weist das Wägesystem 1 einen Freiraum 10 auf, in den das Permanentmagnetsystem 29 des benachbarten Wägesystems 2 hineinragen kann. Das benachbarte Wägesystem ist nämlich gemäß Figur 3 aufgebaut: Der Übersetzungshebel 27 endet hier im unteren Bereich des Systemkörpers und das Permanentmagnetsystem 29 erstreckt sich unterhalb der strichpunktiert eingezeichneten horizontalen Mittelebene 100. Dadurch kann sich das Permanentmagnetsystem 29 des Wägesystems 2 in den Freiraum 10 im Wägesystem 1 erstrecken und umgekehrt kann sich das zum Wägesystem 1 gehörende Permanentmagnetsystem 19, das sich oberhalb der horizontalen Mittelebene 100 befindet, in den Freiraum 20 des Wägesystems 2 erstrecken. Durch die Freiräume 10, 20 etc. in den einzelnen Wägesystemen 1,2 etc. können die Wägesysteme dicht nebeneinander angeordnet sein in einem seitlichen Abstand, der nur durch die Breite des Systemkörpers der Wägesysteme begrenzt ist. Die Permanentmagnetsysteme 19, 29, 39 etc. können dabei bis zu doppelt so breit sein wie die Systemkörper. - Die in Figur 1 eingezeichneten weiteren Wägesysteme sind entsprechend aufgebaut, die Wägesysteme 3 und 5 sind also identisch mit dem Wägesystem 1 und das Wägesystem 4 ist identisch mit dem Wägesystem 2. Auf diese Weise lassen sich beliebig viele Wägesysteme eng nebeneinander anordnen. - Die bisher nicht erwähnten Teile 21 - 26 und 28 des Wägesystems 2 sind im Wesentlichen identisch mit den entsprechenden Teilen 11 bis 16 und 18 des Wägesystems 1.

Wie man beim Vergleich der Figuren 2 und 3 erkennt, sind die benachbarten Wägesysteme vorteilhafterweise identisch aufgebaut, das Wägesystem 2 - und genauso das Wägesystem 4 - ist nur um 180° um die horizontale Mittelachse gedreht eingebaut. Dazu muss der Lastaufnehmer 14, 24 etc. sowohl auf der Unterseite als auch auf der Oberseite Befestigungsmöglichkeiten für die Waagschale aufweisen, von denen jeweils nur eine genutzt wird.

Die Verbindung der einzelnen Wägesysteme untereinander kann in beliebiger Weise erfolgen. In Figur 1 bis 3 weist der Basisbereich 11, 21 etc. z.B. mehrere Löcher 99 auf; durch diese Löcher können Gewindestangen hindurchgesteckt werden, wobei Unterlegscheiben 98 für einen geringen gegenseitigen Abstand der Wägesysteme sorgen (kein Berühren der beweglichen Teile der Wägesysteme), und durch Muttern 97 an den Enden wird das Wägezellen-Paket zusammengehalten. In Figur 1 ist der Übersichtlichkeit halber nur eine solche Gewindestangen-Verbindung eingezeichnet.

In Figur 4 ist eine Variante zu Figur 1 gezeigt. Entsprechende Teile wie in Figur 1 sind mit den gleichen Bezugszeichen bezeichnet und nur durch einen hinzugefügten Beistrich unterschieden. In Figur 4 ist das Permanentmagnetsystem 19' des Wägesystems 1' seitlich so weit verschoben, dass das Permanentmagnetsystem 19' und das Permanentmagnetsystem 29' des benachbarten Wägesystems 2' genau übereinander zu liegen kommen; das Permanentmagnetsystem 29' ist in Figur 4 daher nicht erkennbar. Gerade noch erkennbar ist ein kleiner Teil des Übersetzungshebels 27', der genauso wie der Übersetzungshebel 17' an der Seite des Basisbereiches 11' bzw. 21' in Figur 4 nach rechts austritt und an seinem abgewinkelten Ende die Spule 18' bzw. 28' (nicht erkennbar) trägt.

Bei der in Figur 4 gezeigten Anordnung ragt das Permanentmagnetsystem immer nur in den Freiraum eines benachbarten Wägesystems hinein und füllt ihn weitgehend aus. Im Gegensatz dazu ragt in Figur 1 z. B. der Magnet 29 sowohl in den Freiraum unterhalb des Permanentmagnetsystems 19 als auch in den Freiraum unterhalb des Permanentmagnetsystems 39 hinein. Der Freiraum wird aber jeweils nur etwa zur Hälfte ausgenutzt und die nicht ausgenutzte Hälfte steht für das Permanentmagnetsystem des anderen benachbarten Wägesystems zur Verfugung. - Bei der Anordnung gemäß Figur 4 werden gewissermaßen Wägesystempaare gebildet; im Beispiel der Figur 4 also aus den Wägesystemen 1' und 2' und aus den Wägesystemen 3' und 4'. Diese Paarbildung kann man z. B. auch dazu nutzen, die beiden fluchtend übereinander liegenden Permanentmagnetsysteme zu einem einzigen Doppelmagnetsystem zusammenzufassen.

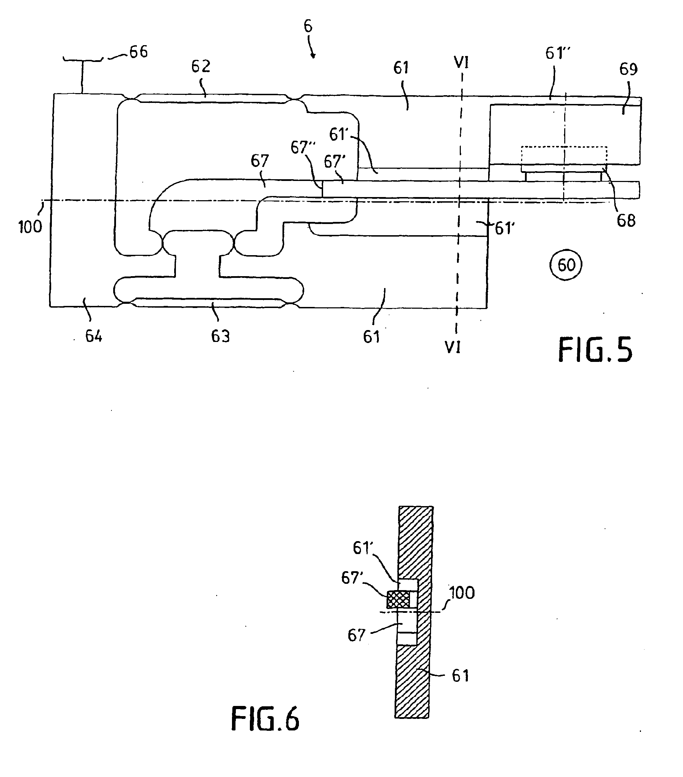

In den Figuren 5 und 6 ist eine zweite Variante eines erfindungsgemäßen Wägesystems gezeigt; Figur 5 ist eine Seitenansicht, Figur 6 ein Schnitt längs der gestrichelten Linie VI - VI in Figur 5. Das Wägesystem 6 besteht aus einem Basisbereich 61, zwei Lenkern 62 und 63, dem Lastaufnehmer 64, der Waagschale 66, dem Übersetzungshebel 67, der Spule 68 und dem Permanentmagnetsystem 69. Der Übersetzungshebel 67 steht ab der Kante 67" seitlich vor, sodass er im Bereich 67' zum Teil in einer Wanne 61' des Basisbereiches und zum anderen Teil neben dem Basisbereich entlang geführt ist, wie es im Schnitt in Figur 6 erkennbar ist. Durch diese Gestaltung ist weder der Übersetzungshebel noch der Basisbereich wesentlich geschwächt. - Das benachbarte Wägesystem ist identisch mit dem gezeichneten Wägesystem und wird wieder um 180° gedreht eingebaut. Dadurch erstreckt sich das Permanentmagnetsystem des benachbarten Wägesystens in den Freiraum 60 des Wägesystems 6 und der vorstehende Bereich des Übersetzungshebels des benachbarten Wägesystems ragt ebenfalls in die Wanne 61' des Wägesystems 6 hinein (unterhalb der Mittelebene 100). Das benachbarte Wägesystem weist ebenfalls die Wanne im Basisbereich auf, sodass die Systemkörper der beiden Wägesysteme wieder direkt nebeneinander angeordnet sein können, ohne auf das Überstehen des Übersetzungshebels Rücksicht nehmen zu müssen.

In der Variante gemäß Figur 5 und 6 ist weiter gezeigt, dass das Permanentmagnetsystem 69 an einem vorkragenden Ausleger 61" des Basisbereiches befestigt werden kann. Dadurch ist eine Befestigung am Boden des Permanentmagnetsystems möglich, während in den Ausgestaltungen gemäß Figur 1 bis 3 und Figur 4 eine Befestigung des Permanentmagnetsystems an seiner Mantelfläche vorgesehen ist.

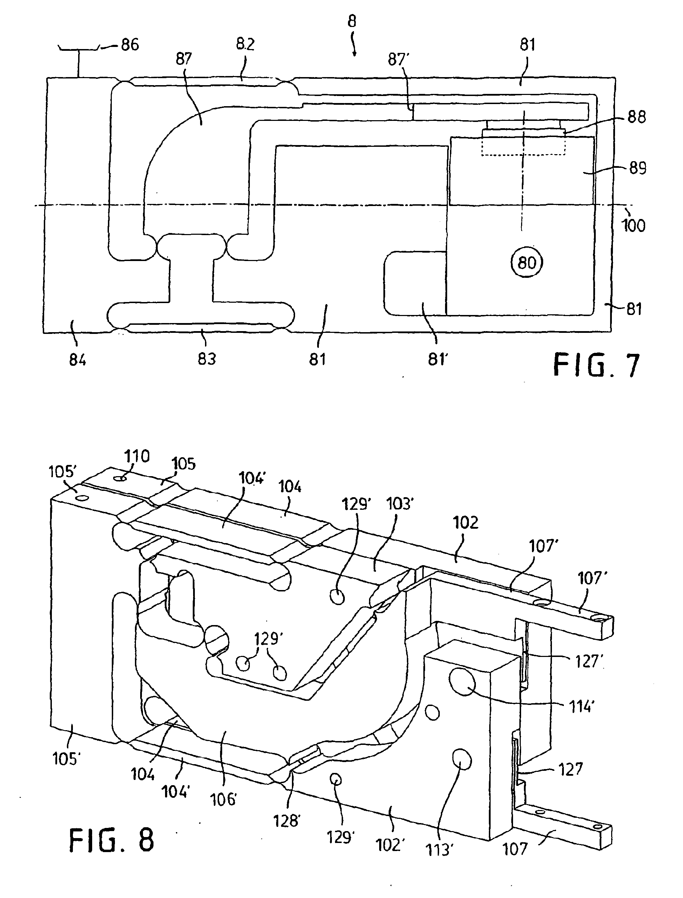

Die bisher beschriebenen Varianten haben alle den Vorteil, dass der Übersetzungshebel durch entsprechende Dimensionierung des Basisbereiches praktisch beliebig lang gewählt werden kann und dass das Permanentmagnetsystem doppelt so breit wie ein einzelner Systemkörper sein kann. Dadurch lässt sich sowohl ein großes Übersetzungsverhältnis realisieren als auch ein entsprechend großes Permanentmagnetsystem einsetzen. Beides erlaubt auch mit schmalen Wägesystemen von z. B. 10mm bis 15mm Breite eine relativ hohe Tragkraft. Sind die Anforderungen bezüglich der Tragkraft nicht ganz so hoch, so reicht häufig auch ein Wägesystem gemäß Figur 7, bei dem der Übersetzungshebel nicht ganz so lang gemacht werden kann, wie in den vorhergehenden Varianten, bei dem dadurch aber der Übersetzungshebel und der Basisbereich an keiner Stelle schmaler als der restliche Systemkörper gemacht werden müssen. Das Wägesystem 8 in Figur 7 - einer Seitenansicht - besteht wieder aus einem Basisbereich 81, zwei Lenkern 82 und 83, dem Lastaufnehmer 84 mit der Waagschale 86, dem Übersetzungshebel 87, der Spule 88 und dem Permanentmagnetsystem 89. Das Permanentmagnetsystem 89 befindet sich oberhalb der Mittelachse 100, sodass wieder ein Freiraum 80 verbleibt, in den die Permanentmagnetsysteme der benachbarten Wägesysteme hineinragen können. Das Permanentmagnetsystem darf also wieder doppelt so breit sein wie der Systemkörper. Dies entspricht - in Aufsicht gesehen - einer Anordnung wie sie in Figur 1 dargestellt ist. - Diese Variante hat den Vorteil, dass der Systemkörper nur zweidimensional bearbeitet werden muss, sodass eine gleichzeitige Fertigung mehrerer gestapelter Systemkörper - beispielsweise durch Drahterodieren oder durch Fräsen - möglich ist.

In Figur 7 ist aber auch angedeutet, dass der Übersetzungshebel 87 rechts von der Kante 87' seitlich abgeknickt sein kann, sodass aus zwei identischen Wägesystemen - das zweite gegenüber dem ersten um 180° gedreht - ein Wägesystempaar entsteht. Die beiden Permanentmagnetsysteme befinden sich dann axial übereinander bzw. bilden ein gemeinsames Doppelspalt-Magnetsystem und befinden sich in der Trennebene der beiden Wägesysteme. Diese Bauweise wurde bereits im Zusammenhang mit Figur 4 beschrieben. In Figur 7 ist für diese Bauweise die notwendige geringe Wanne 81' im Basisbereich eingezeichnet, in die der vorspringende Teil des Übersetzungshebels des zweiten Wägesystems hineinragen kann.

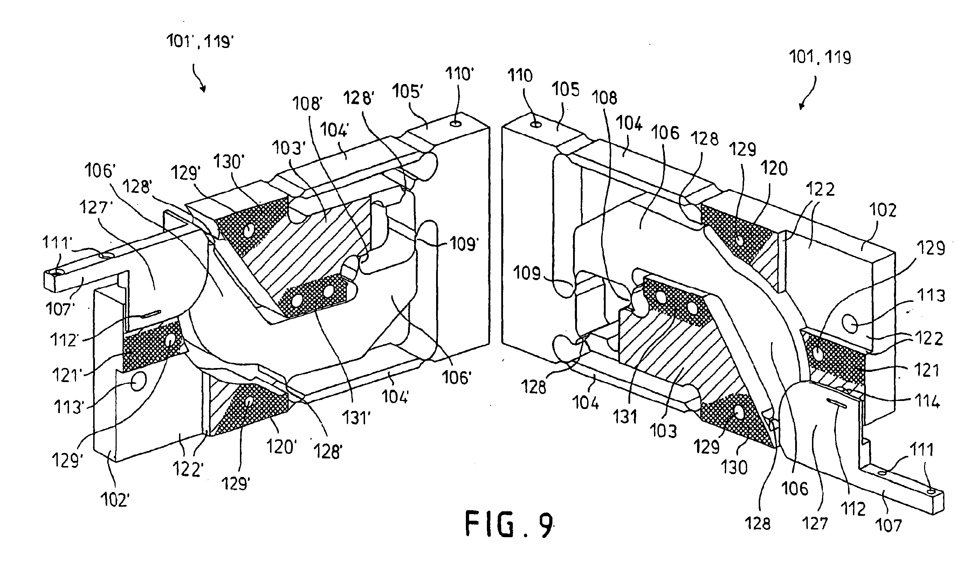

In den Figuren 8 und 9 ist nun eine weitere Variante eines Wägesystempaares gezeigt, die die sich aus der Paarbildung ergebenden Möglichkeiten noch weitgehender ausnutzt. Figur 8 ist eine perspektivische Ansicht des Wägesystempaares, Figur 9 ist eine perspektivische Ansicht der beiden einzelnen Wägesysteme vor der Montage, dargestellt wie ein aufgeklapptes Buch. Der Übersichtlichkeit halber sind dabei die beiden Permanentmagnetsysteme und die Spulen nicht eingezeichnet, sie sind in gleicher Weise aufgebaut wie schon beschrieben.

Das in Figur 9 rechts dargestellte Wägesystem 119 besteht aus einem in zwei Teilbereiche 102 und 103 unterteiltem Basisbereich, zwei Lenkern 104, einem Lastaufnehmer 105 und einem Übersetzungshebel 106. Die Befestigungsstelle am Lastaufnehmer für die nicht dargestellte Waagschale ist nur durch das Loch 110 angedeutet. Die beiden Lenker verbinden als Parallelführung den Lastaufnehmer mit dem Basisbereich. Der Übersetzungshebel ist mit der Dünnstelle 108 am Basisbereich verschwenkbar gelagert, die Übertragung der Gewichtskraft vom Lastaufnehmer auf den kürzeren Hebelarm des Übersetzungshebels erfolgt durch eine Dünnstelle 109 und am Ende 107 des längeren Hebelarms sind Befestigungslöcher 111 für die nicht dargestellte Spule vorgesehen.

Der in Figur 9 dargestellte Systemkörper 101 zeichnet sich nun dadurch aus, dass die beiden Teilbereiche 102 und 103 des Basisbereiches nicht miteinander verbunden sind. Es gibt also hinter dem Übersetzungshebel 106 keine in der Figur verdeckte stabile Verbindung zwischen den beiden Teilbereichen 102 und 103 ! Dadurch kann der Übersetzungshebel zwischen den beiden Teilbereichen 102 und 103 hindurchgeführt werden und beliebig lang sein; trotzdem kann der Übersetzungshebel praktisch die volle Breite des Systemkörpers aufweisen. Dadurch ist der Übersetzungshebel sehr stabil und neigt im Betrieb nicht zu störenden Eigenschwingungen. - Ein Wägesystem mit dem Systemkörper 101 ist natürlich wegen der unverbundenen Teilbereiche 102 und 103 allein nicht funktionsfähig. Funktionsfähig wird das Wägesystem erst dadurch, dass zwei Wägesysteme so miteinander verbunden werden, dass die beiden Teilbereiche des Basisbereiches des jeweils einen Wägesystems die beiden Teilbereiche des Basisbereiches des jeweils anderen Wägesystems in ihrer Lage zueinander fixieren. Die in Figur 9 wie ein aufgeklapptes Buch gezeichneten Systemkörper 101 und 101' zweier Wägesysteme sind also nach der Montage wie ein zugeklapptes Buch nebeneinander angeordnet, wie es in Figur 8 dargestellt ist, und die Basisbereiche sind miteinander verbunden.

In Figur 8 und 9 sind die einzelnen Teile der beiden Wägesysteme 119 und 119' mit den gleichen Bezugszahlen bezeichnet, die Teile des Wägesystems 119' sind jeweils nur mit einem Beistrich versehen, um sie von den Teilen des Wägesystems 119 zu unterscheiden.

In Figur 9 sind die Teilbereiche 102 und 103 sowie 102' und 103', die die volle Breite des Systemkörpers aufweisen, schraffiert dargestellt. Die anderen Bereiche sind 0,2 mm schmaler, sodass diese sich beim Zusammenbau nicht berühren und sich unabhängig voneinander bewegen können. Beim Zusammenbau der beiden Systemkörper können sich also nur die schraffierten Teile der Teilbereiche des Basisbereiches berühren. Aufgrund der Geometrie dieser Teilbereiche berühren sich in Wirklichkeit jedoch nur die kreuzschraffierten Anlageflächen: die Anlagefläche 131 liegt an der Anlagefläche 131' an, die Anlagefläche 121 liegt an der Anlagefläche 121' an, die Anlagefläche 120 liegt an der Anlagefläche 130' an und die Anlagefläche 130 liegt an der Anlagefläche 120' an. Die aneinander anliegenden Bereiche werden jeweils durch Schrauben fest miteinander verbunden, die dazugehörigen Löcher bzw. Gewindelöcher 129 bzw. 129' sind in Figur 8 und 9 erkennbar. Der Teilbereich 103' verbindet also über die Anlageflächen 130' - 120 und 131' - 131 die beiden Teilbereiche 102 und 103 des Basisbereiches des Systemkörpers 101 stabil miteinander; der Teilbereich 102' verbindet über die Anlageflächen 121' -121 und 120' -130 nochmals die beiden Teilbereiche 102 und 103 des Basisbereiches des Systemkörpers 101 stabil miteinander. Durch diese doppelte Verbindung bilden die beiden Teilbereiche 102 und 103 einen stabilen Basisbereich für den Systemkörper 101. In gleicher Weise verbindet der Teilbereich 103 über die Anlageflächen 130 -120' und 131 -131' die beiden Teilbereiche 102' und 103' des Basisbereiches des Systemkörpers 101' stabil miteinander; zusätzlich verbindet der Teilbereich 102 über die Anlageflächen 121 -121' und 120 -130' noch einmal die beiden Teilbereiche 102' und 103' des Basisbereiches des Systemkörpers 101' stabil miteinander. - Durch die beschriebenen Verbindungen entsteht also ein Wägesystem-Paar, bei dem die beiden Basisbereiche 102 und 103 sowie 102' und 103' eine stabile Einheit bilden. Dadurch sind sowohl die getrennten Teilbereiche 102 und 103 des Basisbereiches des Systemkörpers 101 als auch die getrennten Teilbereiche 102' und 103' des Basisbereiches des Systemkörpers 101' zueinander fixiert und verhalten sich wie ein ungetrennter Basisbereich.

Die in Figur 8 und 9 dargestellten Systemkörper 101 und 101' sind identische Teile. Der Systemkörper 101' ist im Vergleich zum Systemkörper 101 um 180° um eine horizontale Mittellängsachse gedreht. Dazu muss nur bei jedem Lastaufnehmer 105 bzw. 105' sowohl auf der Oberseite als auch auf der Unterseite je ein Befestigungsloch 110 bzw. 110' zur Befestigung der Waagschale vorhanden sein. Die Systemkörper 101 bzw. 101' sind jeweils einstückig aus einem Metallblock herausgearbeitet (z. B. durch Fräsen oder Drahterodieren). Durch dieses monolithische Konstruktionsprinzip lassen sich sehr reproduzierbare Wägesysteme herstellen, da keine Klemmungen, Verschraubungen etc. in der Nähe von federnden oder beweglichen Teilen notwendig sind. Damit sich ein einzelner Systemkörper überhaupt fertigen lässt, sind dünne Verbindungsstege 128 bzw. 128' vorgesehen. Diese Verbindungsstege verbinden vor allem die beiden Teilbereiche 102 und 103 bzw. 102' und 103' des Basisbereiches über den Übersetzungshebel 106 bzw. 106' hinweg und verhindern so ein Auseinanderfallen der Teilbereiche 102 und 103 bzw. 102' und 103'. Nach der Montage der beiden einzelnen Systemkörper 101 und 101' zu einem Paar ist die Stabilität durch die gegenseitige Verbindung gegeben und die Verbindungsstege können durchtrennt werden. (In allen Figuren sind die Verbindungsstege bereits durchtrennt gezeichnet.)

In Figur 9 ist weiter erkennbar, dass das Ende 107 des Übersetzungshebels 106 sich seitlich etwas über den Basisbereich 102/103 hinaus erstreckt. An der entsprechenden Stelle weist dann der Teilbereich 102' des Basisbereiches des zweiten Systemkörpers 101' einen Freiraum 122' auf, in den der überstehende Teil des Endes 107 des Übersetzungshebels hineinragen kann. In gleicher Weise kann das überstehende Ende 107' des Übersetzungshebels 106' des zweiten Systemkörpers 101' in den Freiraum 122 am Teilbereich 102 des Basisbereiches des ersten Systemkörpers 101 hineinragen. - Dadurch befinden sich die Enden 107 und 107' der Übersetzungshebel der beiden Systemkörper 101 und 101', die das Wägesystem-Paar bilden, genau übereinander in der vertikalen Mittelebene des Wägesystem-Paares. Damit kann für beide Wägesysteme des Paares ein gemeinsamer Doppelmagnet eingesetzt werden, wie er schon im Zusammenhang mit den anderen Varianten erläutert wurde.

In Figur 8 und 9 ist weiter erkennbar, dass in einer vorteilhaften Weiterbildung auch der Lagensensor für die Regelung der elektromagnetischen Kraftkompensation mit in die Paarbildung einbezogen werden kann: Der Strahlungssender für das erste Wägesystem 119 befindet sich im Loch 114 im Teilbereich 102 des Basisbereiches und beleuchtet den Schlitz 112 an der Fahne 127 am hinteren Ende 107 des Übersetzungshebels 106. Der Strahlungsempfänger, der auf die durch den Schlitz hindurchtretende Strahlung anspricht, befindet sich im Loch 113' im Teilbereich 102' und damit also am Systemkörper 101' des zweiten Wägesystems. In entsprechender Weise ist der Strahlungssender für das zweite Wägesystem 119' in einem (nur in Figur 8 erkennbaren) Loch 114' im Teilbereich 102' des Basisbereiches angeordnet, die Strahlung durchsetzt den Schlitz 112' und wird von einem Strahlungsempfänger, der sich im Loch 113 befindet, detektiert.

Die gerade beschriebene Einbeziehung des Lagensensors der elektromagnetischen Kraftkompensation in die Paarbildung kann selbstverständlich auch in den vorher beschriebenen Varianten eingesetzt werden, z. B. für die Variante gemäß Figur 4, gemäß Figur 5/6 und gemäß Figur 7.

### Bezugszeichenliste

- 1,1': Wägesystem
- 2, 2': Wägesystem
- 3, 3': Wägesystem
- 4, 4': Wägesystem
- 5: Wägesystem
- 6: Wägesystem
- 8: Wägesystem
- 10: Freiraum
- 11,11': Basisbereich
- 12,12': Lenker
- 13: Lenker
- 14,14': Lastaufnehmer
- 15,15': Gelenkstelle (Materialdünnstelle)
- 16: Waagschale
- 16', 16": Kreis
- 17,17': Übersetzungshebel
- 18,18': Spule
- 19,19': Permanentmagnetsystem
- 20: Freiraum
- 21, 21': Basisbereich
- 22: Lenker
- 23: Lenker
- 24: Lastaufnehmer
- 25: Gelenkstelle (Materialdünnstelle)
- 26: Waagschale
- 27, 27': Übersetzungshebel
- 28, 28': Spule
- 29, 29': Permanentmagnetsystem
- 39, 39': Permanentmagnetsystem
- 60: Freiraum
- 61: Basisbereich
- 61': Wanne im Basisbereich 61
- 61": Ausleger des Basisbereiches 61
- 62: Lenker
- 63: Lenker
- 64: Lastaufnehmer
- 66: Waagschale
- 67: Übersetzungshebel
- 67': Bereich des Übersetzungshebels 67
- 67": Kante am Übersetzungshebel 67
- 68: Spule
- 69: Permanentmagnetsystem
- 80: Freiraum
- 81: Basisbereich
- 81': Wanne im Basisbereich 81
- 82: Lenker
- 83: Lenker
- 84: Lastaufnehmer
- 86: Waagschale
- 87: Übersetzungshebel
- 87': Kante am Übersetzungshebel 87
- 88: Spule
- 89: Permanentmagnetsystem
- 97: Mutter
- 98: Unterlegscheibe
- 99: Loch
- 100: Horizontale Mittelebene

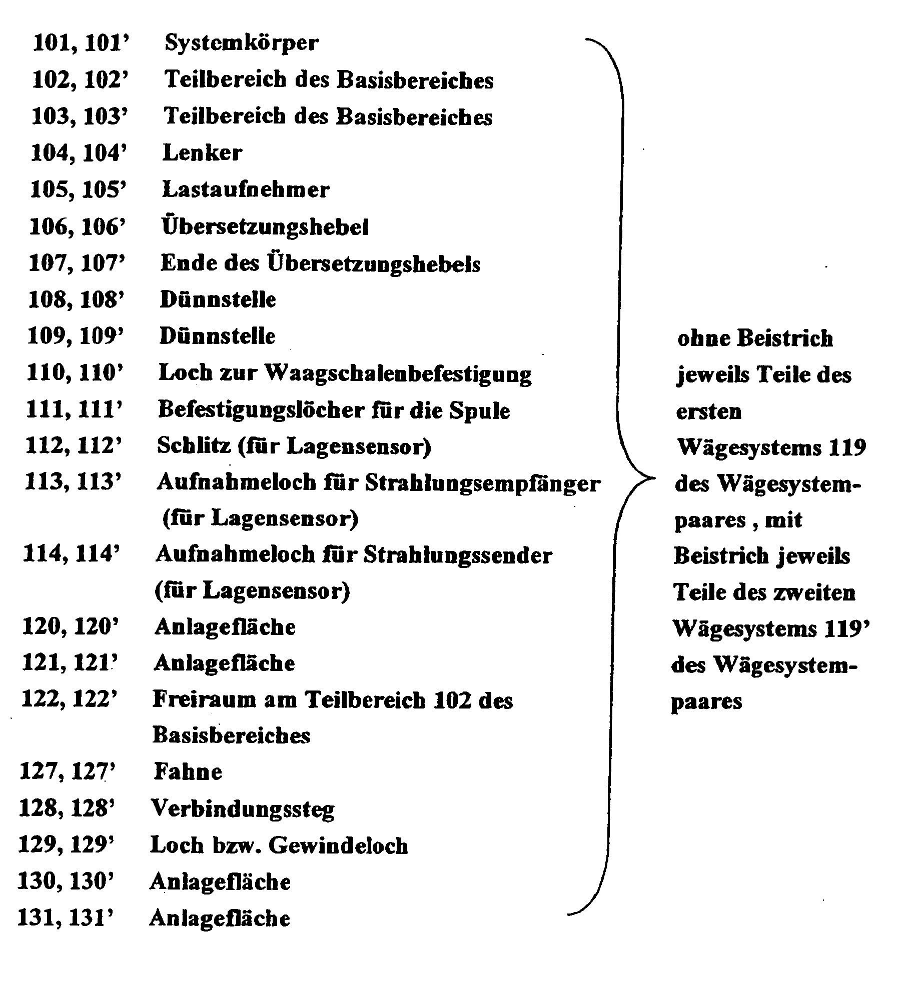

## Patentansprüche

1. Anordnung mehrerer seitlich nebeneinander angeordneter Wägesystem nach dem Prinzip der elektromagnetischen Kraftkompensation mit jeweils zwei Lenkern (12, 12', 13, 22, 23, 62, 63, 82, 83, 104, 104'), die als Parallelführung einen Lastaufnehmer (14, 14', 24, 64, 84, 105, 105') mit einem gehäusefesten Basisbereich (11, 11', 21, 21', 61, 81, 102, 102' , 103, 103') verbinden, und mit mindestens einem Übersetzungshebel (17, 17', 27, 27', 67, 87, 106, 106'), der am Basisbereich (11, 11', 21, 21', 61, 81, 102, 102', 103, 103') gelagert ist und an dessen kurzem Hebelarm über ein Koppelelement die vom Lastaufnehmer (14, 14', 24, 64, 84, 105, 105') übertragene Gewichtskraft angreift und an dessen langem Hebelarm ein Spule (18, 18', 28, 28', 68, 88), die in den Luftspalt eines Permanentmagnetsystems (19, 19', 29, 39, 39', 69, 89) hineinragt, befestigt ist, wobei das Permanentmagnetsystem (19, 19', 29, 29', 39, 39', 69, 89) breiter ist als der aus dem Basisbereich (11,11', 21, 21', 61, 81, 102, 102', 103, 103'), den Lenkern (12, 12', 13, 22, 23, 62, 63, 82, 83, 104, 104'), dem Lastaufnehmer (14, 14', 24, 64, 84, 105, 105') und dem/den Übersetzungshebel(n) (17, 17', 27, 27', 67, 87, 106, 106') gebildete Systemkörper,
**dadurch gekennzeichnet,**
**dass** die Wägesysteme jeweils einen Freiraum (10, 20, 60, 80) aufweisen, in den ein Permanentmagnetsystem eines benachbarten Wägesystems hineinragt bzw. in den die Permanentmagnetsysterre benachbarter Wägesysteme hineinragen und
**dass** der Freiraum (10, 20, 60, 80) und das Permanentmagnetsystem (19, 19', 29, 39, 39', 69, 89) auf unterschiedlichen Seiten einer gemeinsamen horizontalen Mittelebene (100) der Wägesysteme angeordnet sind, und dass jedes zweite Wägesystem um eine horizontale Längsachse gedreht eingebaut ist.

2. Wägesystem nach Anspruch 1, **dadurch gekennzeichnet, dass** der Lastaufnehmer (14,14',24,64,84,105,105') jedes Wägesystems sowohl auf der Oberseite als auch auf der Unterseite Befestigungsmöglichkeiten für eine Waagschale aufweist.

3. Wägesystem nach Anspruch 1, **dadurch gekennzeichnet, dass** das Permanentmagnetsystem (19',29',39') jedes Wägesystems sich soweit seitlich außerhalb der vertikalen Mittelebene des Systemkörpers befindet, dass die Permanentmagnetsysteme zweier benachbarter Wägesysteme sich fluchtend übereinander befinden.

4. Wägesystem nach Anspruch 3, **dadurch gekennzeichnet, dass** die beiden benachbarten Wägesysteme ein gemeinsames Permanentmagnetsystem besitzen.

5. Wägesystem nach Anspruch 1, **dadurch gekennzeichnet, dass** mindestens ein Übersetzungshebel (67,87,107,107') sich zumindest teilweise seitlich neben dem Basisbereich (61,81,102,102',103,103') erstreckt und dass der Basisbereich einen weiteren Freiraum (61',81',122,122') aufweist, in den der überstehende Bereich des Übersetzungshebels des benachbarten Wägesystems hineinragen kann.

6. Wägesystem nach Anspruch 5, **dadurch gekennzeichnet, dass** von mehreren seitlich nebeneinander angeordneten Wägesystemen der überstehende Bereich des Übersetzungshebels (67,87,107') des einen Wägesystems sich oberhalb der horizontalen Mittelebene (100) des Wägesystems befindet und der überstehende Bereich des Übersetzungshebels (107) des benachbarten Wägesystems sich unterhalb der horizontalen Mittelebene befindet.

7. Wägesystem nach Anspruch 6, **dadurch gekennzeichnet, dass** die Systemkörper im Wesentlichen identisch ausgebildet sind und in der Weise seitlich nebeneinander angeordnet sind, dass jeder zweite Systemkörper um eine horizontale Längsachse gedreht eingebaut ist.

8. Wägesystem nach Anspruch 1, **dadurch gekennzeichnet, dass** der Basisbereich in zwei getrennte Teilbereiche (102,103;102',103') unterteilt ist, dass der Übersetzungshebel (106,106') zwischen diesen beiden Teilbereichen hindurchgeführt ist und dass die. Basisbereiche von zwei benachbarten Wägesystemen so miteinander verbunden sind, dass die beiden Teilbereiche (102,103) des Basisbereiches des jeweils einen Wägesystems die beiden Teilbereiche (102',103') des Basisbereiches des jeweils anderen Wägesystems in ihrer Lage zueinander fixieren.

9. Wägesystem nach einem der Ansprüche 3 bis 8 mit einem optischen Lagensensor zur Regelung des Stromes durch die Spule der elektromagnetischen Kraftkompensation, **dadurch gekennzeichnet, dass** der Strahlungssender für das jeweilige Wägesystem am Basisbereich dieses Wägesystems angeordnet ist, während der Strahlungsempfänger für das jeweilige Wägesystem am Basisbereich des jeweils anderen Wägesystems angeordnet ist.

10. Wägesystem nach einem der Ansprüche 3 bis 8 mit einem optischen Lagensensor zur Regelung des Stromes durch die Spule der elektromagnetischen Kraftkompensation, **dadurch gekennzeichnet, dass** der Strahlungsempfänger für das jeweilige Wägesystem am Basisbereich dieses Wägesystemes angeordnet ist, während der Strahlungssender für das jeweilige Wägesystem am Basisbereich des jeweils anderen Wägesystems angeordnet ist.

## Claims

1. Arrangement of a plurality of weighing systems according to the principle of electromagnetic force compensation disposed laterally next to each other with two guides each, which as parallel guide means connect a load receiver with a base region fixed relative to the housing, and with at least one translation lever, which is mounted at the base region and at the short lever arm of which the weight force transmitted by the load receiver acts by way of a coupling element and at the long lever arm of which a coil, which projects into the air gap of a permanent magnet system, is fastened, wherein the permanent magnet system (19, 19', 29, 39, 39', 69, 89) is wider than the system body formed by the base region (11, 11', 21, 21', 61, 81, 102, 102', 103, 103'), the guides (12, 12', 13, 22, 23, 62, 63, 82, 83, 104, 104'), the load receiver (14, 14', 24, 64, 84, 105, 105'), and the translation lever or levers (17, 17', 27, 27', 67, 87, 106, 106') **characterized in that** each weighing systems has a free space (10, 20, 60, 80), into which a permanent magnet system of an adjacent weighing system projects or into which the permanent magnet systems of adjacent weighing systems project and that the free space (10, 20, 60, 80) and the permanent magnet system (19, 19', 29, 39, 39', 69, 89) are arranged on different sides of a common center plane (100) of the weighing systems and that each second weighing system is installed turned around a horizontal longitudinal axis.

2. Weighing system according to claim 1, **characterised in that** the load receiver (14, 14', 24, 64, 84, 105, 105') of each weighing system has not only on the upper side, but also on the lower side, fastening possibilities for a weighing pan.

3. Weighing system according to claim 1, **characterised in that** the permanent magnet system (19', 29', 39') of each weighing system is disposed laterally outside the vertical centre plane of the system body to such an extent that the permanent magnet systems of two adjacent weighing systems are disposed in alignment one above the other.

4. Weighing system according to claim 3, **characterised in that** the two adjacent weighing systems have a common permanent magnet system.

5. Weighing system according to claim 1, **characterised in that** at least one translation lever (67, 87, 107, 107') extends at least partly laterally adjacent to the base region (61, 81, 102, 102', 103, 103') and that the base region has a further free space (61', 81', 122, 122') into which the protruding region of the translation lever of the adjacent weighing system can project.

6. Weighing system according to claim 5, **characterised in that** of several weighing systems arranged laterally adjacent to one another the protruding region of the translation lever (67, 87,107') of one weighing system is disposed above the horizontal centre plane (100) of the weighing system and the protruding region of the translation lever (107) of the adjacent weighing system is disposed below the horizontal centre plane.

7. Weighing system according to claim 6, **characterised in that** the system bodies are of substantially identical construction and are arranged laterally adjacent to one another in the manner that each second system body is installed turned around a horizontal longitudinal axis.

8. Weighing system according to claim 1, **characterised in that** the base region is subdivided into two separate part regions (102, 103; 102', 103'), that the translation lever (106, 106') is guided between these two part regions and that the base regions of two adjacent weighing systems are so connected together that the two part regions (102, 103) of the base region of one weighing system fix the two part regions (102', 103') of the base region of the respective other weighing system in their position relative to one another.

9. Weighing system according to one of claims 3 to 8 with an optical sensor for regulation of the current through the coil of the electromagnetic force compensation means, **characterised in that** the radiation transmitter for the respective weighing system is arranged at the base region of this weighing system, whilst the radiation receiver for the respective weighing system is arranged at the base region of the respective other weighing system.

10. Weighing system according to one of claims 3 to 8 with an optical sensor for regulation of the current through the coil of the electromagnetic force compensation means, **characterised in that** the radiation receiver for the respective weighing system is arranged at the base region of this weighing system, whilst the radiation transmitter for the respective weighing system is arranged at the base region of the respective other weighing system.

## Revendications

1. Arrangement d'une pluralité de systèmes de pesage selon le principe de la compensation de forces électromagnétique ayant deux bielles chacun qui relient en tant que guidage parallèle un récepteur de charge à une base fixée au boîtier, et avec au moins un levier de transmission qui est logé sur la base et sur le bras de levier court duquel est appliqué le poids transmis par le récepteur de charge, par l'intermédiaire d'un élément de couplage et sur le bras de levier long duquel est fixée une bobine qui pénètre dans l'entrefer d'un système à aimants permanents, cependant le système à aimants permanents (19, 19', 29, 39, 39', 69, 89) est plus large que le corps de système formé de la base (11, 11 ', 21, 21 ', 61, 81, 102, 102', 103, 103'), des bielles (12, 12', 13, 22, 23, 62, 63, 82, 83, 104, 104'), du récepteur de charge (14, 14', 24, 64, 84, 105, 105') et du/des levier(s) de transmission (17, 17', 27, 27', 67, 87, 106, 106'), **caractérisé en ce que** chaque système de pesage présente un espace libre (10, 20, 60, 80), dans lequel le système à aimants permanents d'un système de pesage contigu pénètre ou dans lequel les systèmes à aimants permanents de systèmes de pesage contigus pénètrent et **en ce que** l' espace libre (10, 20, 60, 80) et le système à aimants permanents (19, 19', 29, 39, 39', 69, 89) se trouvent aux cotés différentes d'un plan médian horizontal (100) commun des système de pesage et **en ce que** chaque deuxième système de pesage est installé de manière tournée autour d'un axe longitudinal horizontal.

2. Système de pesage selon la revendication 1, **caractérisé en ce que** le récepteur de charge (14, 14', 24, 64, 84, 105, 105') de chaque système de pesage présente sur sa face supérieure ainsi que sur sa face inférieure, des possibilités de fixation destinées à un plateau.

3. Système de pesage selon la revendication 1, **caractérisé en ce que** le système à aimants permanents (19', 29', 39') de chaque système de pesage se trouve latéralement en dehors du plan médian vertical du corps du système dans la mesure où les systèmes à aimants permanents de deux systèmes de pesage contigus se trouvent en alignement l'un sur l'autre.

4. Système de pesage selon la revendication 3, **caractérisé en ce que** les deux systèmes de pesage contigus possèdent un système à aimants permanents commun.

5. Système de pesage selon la revendication 1, **caractérisé en ce qu'**au moins un levier de transmission (67, 87,107, 107') s'étend au moins en partie latéralement à côté de la base (61, 81, 102, 102', 103, 103'), et **en ce que** la base présente un autre espace libre (61', 81', 122, 122'), dans lequel la zone saillante du levier de transmission du système de pesage contigu peut pénétrer.

6. Système de pesage selon la revendication 5, **caractérisé en ce que** parmi plusieurs systèmes de pesage disposés latéralement l'un à côté de l'autre de la zone saillante du levier de transmission (67, 87, 107') d'un système de pesage, se trouve au-dessus du plan médian horizontal (100) du système de pesage et la zone saillante du levier de transmission 107 du système de pesage contigu se trouve au-dessous du plan médian horizontal.

7. Système de pesage selon la revendication 6, **caractérisé en ce que** les corps de système sont formés essentiellement de manière identique et sont disposés latéralement l'un à côté de l'autre de telle manière que chaque deuxième corps de système soit installé de manière tournée autour d'un axe longitudinal horizontal.

8. Système de pesage selon la revendication 1, **caractérisé en ce que** la base est divisée en deux parties séparées (102, 103; 102', 103'), **en ce que** le levier de transmission (106, 106') est guidé au travers de ces deux parties, et **en ce que** les bases de deux systèmes de pesage contigus sont reliées l'une à l'autre de telle manière que les deux parties (102, 103) de la base d'un système de pesage fixent les deux parties (102', 103') de la base de l'autre système de pesage dans leur position l'une par rapport à l'autre.

9. Système de pesage selon l'une quelconque des revendications 3 à 8 avec un capteur de position optique destiné à réguler le courant traversant la bobine de la compensation de forces électromagnétique, **caractérisé en ce que** l'émetteur de rayonnement pour le système de pesage est disposé sur la base de ce système de pesage, alors que le récepteur de rayonnement pour le système de pesage est disposé sur la base de l'autre système de pesage.

10. Système de pesage selon l'une quelconque des revendications 3 à 8 avec un capteur de position optique destiné à réguler le courant traversant la bobine de la compensation de forces électromagnétique, **caractérisé en ce que** le récepteur de rayonnement pour le système de pesage est disposé sur la base de ce système de pesage, alors que l'émetteur de rayonnement pour le système dé pesage est disposé sur la base de l'autre système de pesage.
